# EUROPÄISCHE PATENTSCHRIFT

(11) **EP 0 491 750 B1**
(45) Veröffentlichungstag und Bekanntmachung des Hinweises auf die Patenterteilung: **09.06.1993**
(21) Anmeldenummer: 90913174.0
(22) Anmeldetag: 10.09.1990
(51) Int. Cl.: B60P 1/16, F15B 3/00

(54) **STEUERVORRICHTUNG FÜR HYDRAULISCHE ARBEITSZYLINDER EINER LADEBORDWAND EINES FAHRZEUGES**
CONTROL DEVICE FOR HYDRAULIC WORKING CYLINDERS OF A LOADING BOARD WALL OF A VEHICLE
DISPOSITIF DE COMMANDE DES VERINS HYDRAULIQUES DU HAYON DE CHARGEMENT D'UN VEHICULE

(30) Priorität: 13.09.1989 AT 2139/89
(43) Veröffentlichungstag der Anmeldung: 01.07.1992
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9000090
(87) Internationale Veröffentlichungsnummer: WO9104169

(56) Entgegenhaltungen:
- GB-A- 2 070 692
- US-A- 2 229 561
- US-A- 2 326 594
- PATENT ABSTRACTS OF JAPAN, no. 2646 (M-76) & JP-A-51 149617 (SHINMEIWA KGOYO K.K.) 22. Dezember 1976

## Beschreibung

Die Erfindung betrifft eine Steuervorrichtung für hydraulische Arbeitszylinder einer Ladebordwand eines Fahrzeuges, mit einer von einem Motor angetriebenen Hydraulikmediumpumpe, die mit einem Mediumvorrat und über von einer Pumpenleitung ausgehende Pumpenzweigleitungen jeweils mit einer Kammer mindestens eines Hubzylinders und mindestens eines Schließzylinders der Ladebordwand über zugeordnete Steuerventile in Verbindung setzbar ist, wobei ein Druckübersetzungs-Kolbenzylinder parallel zu den Pumpenzweigleitungen geschaltet ist.

Bei bisher bekannten Steuervorrichtungen dieser Art hat sich in der Praxis das Problem ergeben, daß bei unvorschriftsmäßiger Positionierung der Last auf der Ladebordwand Kippmomente entstehen, die sich als erhöhte Zug- und Druckkräfte in den Hubarmen und Schließzylindern der Ladebordwand auswirken. Dabei kann es beispielsweise zu einer Überschreitung bis zum 5-fachen der zulässigen Kräfte kommen, die zu einer Beschädigung oder Zerstörung der Hubarme und/oder Schließzylinder führen kann.

Die Erfindung zielt darauf ab, eine Vorrichtung der einleitend angegebenen Art zu schaffen, welche die vorstehend aufgezeigten Gefahren hintanhält. Die erfindungsgemäße Einrichtung hat die Merkmale, daß an die mit dem Schließzylinder in Verbindung stehende Kammer der kleineren Kolbenseite des Druckübersetzungs-Kolbenzylinders ein elektrischer Druckschalter, mit welchem bei Überschreitung eines vorbestimmten Druckes der Pumpenmotorantrieb stillsetzbar ist, oder ein einstellbares Hydraulikventil angeschlossen ist, über welches die Pumpenzweigleitungen absperrbar oder die Pumpenleitung mit einer Rückleitung zum Mediumvorrat in Verbindung setzbar und gegebenenfalls der Pumpenmotor stillsetzbar ist.

Hiedurch wird auf konstruktiv einfache Weise erreicht, daß vor Auftreten einer Überlastung der die Hubarme und Schließzylinder bildenden Bauteile der Ladebordwand ein Stillsetzen des Pumpenmotors und/oder ein Absperren der Hydraulikmediumzuleitung erfolgt.

Vorzugsweise ist vom elektrischen Druckschalter oder vom einstellbaren Hydraulikventil ein Zählwerk für die Anzahl der Drucküberschreitungen aktivierbar.

Die Erfindung wird nachfolgend an Ausführungsbeispielen unter Bezugnahme auf die Zeichnungen näher erläutert, in denen zeigen:
Fig. 1 ein hydraulisches Schaltschema einer Steuervorrichtung gemäß der Erfindung und
Fig. 2 ein Schaltschema einer alternativen Ausführungsform.

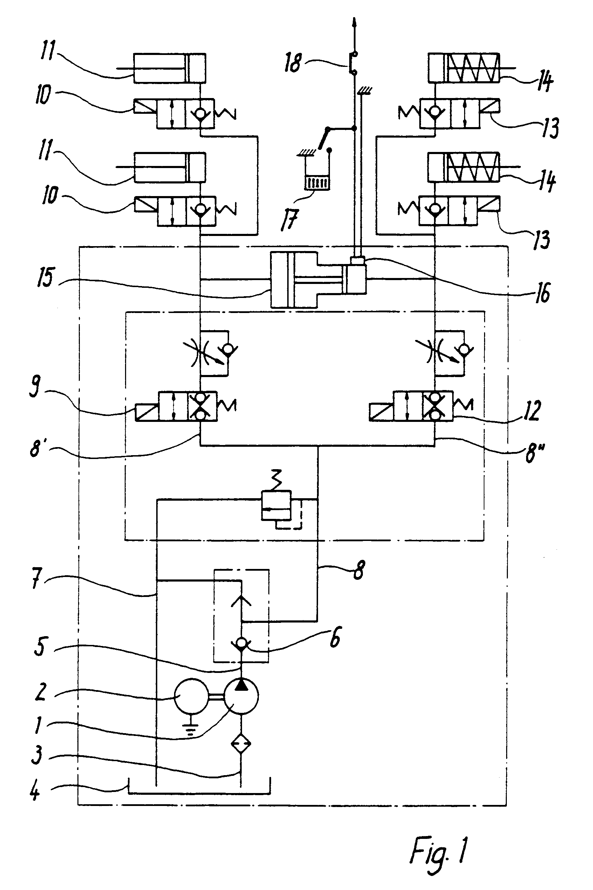

Gemäß Fig. 1 ist eine Hydraulikmediumpumpe 1 von einem Elektromotor 2 angetrieben und steht über eine Leitung 3 mit einem Hydraulikmediumvorrat 4 in Verbindung. Die Pumpe 1 steht ferner über eine Pumpenleitung 5, die ein Rückschlagventil 6 enthält, mit einer Mediumrückleitung 7 und einer Leitung 8 in Verbindung, die sich in Zweigleitungen 8', 8'' verzweigt. Der in Fig. 1 linke Zweig 8' speist über ein steuerbares Hubventil 9 und zwei steuerbare Hubzylinderventile 10 zwei Hubzylinder 11 der nicht gezeigten Ladebordwand.

Analog speist die in Fig. 1 rechte Zweigleitung 8'' über ein steuerbares Schließventil 12 und zwei steuerbare Schließzylinderventile 13 zwei Schließzylinder 14 der Ladebordwand. Zwischen den Ventilen 9 und 10 einerseits sowie 12 und 13 anderseits ist an die Zweigleitungen 8', 8'' ein Druckübersetzer-Kolbenzylinder 15 parallel geschaltet, dessen größere Kolbenseite dem Hubzylinder zugekehrt ist.

An die kleinere Kammer des Druckübersetzer-Kolbenzylinders 15 ist gemäß Fig. 1 ein einstellbarer elektrischer Druckschalter 16 angeschlossen, der seinerseits mit einem Zählwerk 17 und einem Unterbrecherschalter 18 für die elektrische Pumpenmotor-Anschlußleitung in Verbindung steht. Der Druckschalter 16 ist z.B. auf 220 bar eingestellt, wenn die linke Seite des Druckübersetzers auf 180 bar eingestellt ist.

Das Zählwerk 17 ist in der Steueranlage der Ladebordwand versiegelt angeordnet und schaltet bei jeder Überlastung um eine Stelle weiter, um die Anzahl der Lastüberschreitungen über einen längeren Zeitraum zu registrieren.

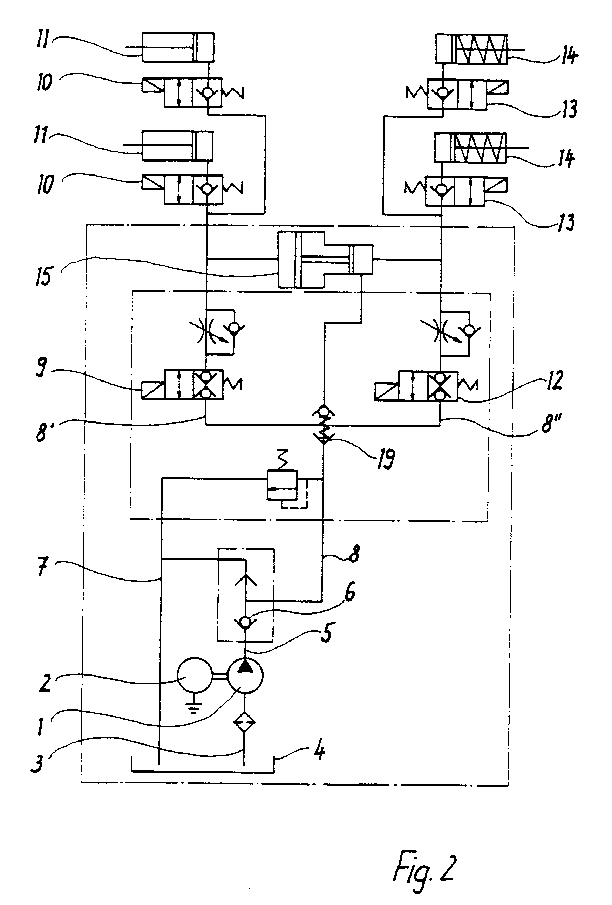

Gemäß der in Fig. 2 gezeigten Ausführungsform ist der Druckschalter 17 nach Fig. 1 durch ein an die kleinere Kammer des Druckübersetzer-Kolbenzylinders 15 angeschlossenes einstellbares hydraulisches Wechselventil oder Sperrventil 19 ersetzt, welches an der Verzweigungsstelle der Pumpenzweigleitungen 8', 8'' eingeschaltet ist und diese bei Überschreiten eines bestimmten Druckes von z.B. 220 bar absperrt. Gegebenenfalls kann über dieses Hydraulikventil auch die elektrische Pumpenmotorspeiseleitung unterbrochen werden. Statt des dargestellten Hydraulikventiles könnte auch ein Kolbenschieber od.dgl. vorgesehen werden. Über das Hydraulikventil kann auch ein Zählwerk analog dem Zählwerk 17 aktiviert werden.

Die Erfindung ist nicht auf die dargestellten Beispiele beschränkt, diese können vielmehr im Rahmen des allgemeinen Erfindungsgedankens verschiedentlich abgewandelt werden. So kann insbesondere bei der in Fig. 2 gezeigten Ausführung ein Hydraulikventil 19 vorgesehen werden, welches im Falle einer Überlastung die Pumpenleitung 8 mit der Mediumrückleitung 7 in Verbindung setzt, so daß die Pumpe leer läuft.

## Patentansprüche

1. Steuervorrichtung für hydraulische Arbeitszylinder einer Ladebordwand eines Fahrzeuges, mit einer von einem Motor angetriebenen Hydraulikmediumpumpe, die mit einem Mediumvorrat und über von einer Pumpenleitung ausgehende Pumpenzweigleitungen jeweils mit einer Kammer mindestens eines Hubzylinders und mindestens eines Schließzylinders der Ladebordwand über zugeordnete Steuerventile in Verbindung setzbar ist, wobei ein Druckübersetzungs-Kolbenzylinder parallel zu den Pumpenzweigleitungen geschaltet ist, dadurch gekennzeichnet, daß an die mit dem Schließzylinder (14) in Verbindung stehende Kammer der kleineren Kolbenseite des Druckübersetzungs-Kolbenzylinders (15) ein elektrischer Druckschalter (16), mit welchem bei Überschreitung eines vorbestimmten Druckes der Pumpenmotorantrieb stillsetzbar ist, oder ein einstellbares Hydraulikventil (19) angeschlossen ist, über welches die Pumpenzweigleitungen (8', 8'') absperrbar oder die Pumpenleitung (8) mit einer Rückleitung (7) zum Mediumvorrat (4) in Verbindung setzbar und gegebenenfalls der Pumpenmotor stillsetzbar ist.

2. Steuervorrichtung nach Anspruch 1, dadurch gekennzeichnet, daß das einstellbare Hydraulikventil (19) zum Absperren der Pumpenzweigleitungen (8', 8'') durch ein Wechselventil gebildet ist.

3. Steuervorrichtung nach Anspruch 1, dadurch gekennzeichnet, daß vom elektrischen Druckschalter (16) oder vom einstellbaren Hydraulikventil (19) ein Zählwerk (17) für die Anzahl der Drucküberschreitungen aktivierbar ist.

## Claims

1. Control device for hydraulic working cylinder of a loading board wall of a vehicle, comprising a motor-driven hydraulic medium pump which can be connected via associated control valves to a medium reservoir and via pump branch lines departing from a pump line to a chamber of at least one lifting cylinder and at least one locking cylinder of the loading board wall, a pressure intensifier piston cylinder being connected in parallel to the pump branch lines, characterised in that an electric manometric switch (16) by means of which the pump motor drive can be stopped when a predetermined pressure is exceeded, or an adjustable hydraulic valve (19) by means of which the pump branch lines (8', 8'') can be blocked or the pump line (8) can be connected to a return line (7) to the medium reservoir (4) and possibly the pump motor can be stopped is connected to the chamber of the smaller head end of the pressure intensifier piston cylinder (15) connected to the locking cylinder (14).

2. Control device according to claim 1, characterised in that the adjustable hydraulic valve (19) for blocking the pump branch lines (8', 8'') is formed by a shuttle valve.

3. Control device according to claim 1, characterised in that a meter (17) for the number of cases where the pressure is exceeded can be activated by the electric manometric switch (16) or by the adjustable hydraulic valve (19).

## Revendications

1. Dispositif de commande des vérins hydrauliques d'un hayon de véhicule formant plate-forme de chargement, comportant une pompe à fluide hydraulique entraînée par un moteur, laquelle pompe, par des valves correspondantes, peut être mise en communication avec un réservoir de liquide hydraulique et, à travers des conduites secondaires partant d'une conduite de refoulement, avec une chambre respectivement d'au moins un vérin de levage et d'au moins un vérin de fermeture du hayon, un ensemble piston-cylindre multiplicateur de pression étant branché en parallèle avec les conduites secondaires, caractérisé par le fait qu'un mano-contacteur (16) électrique, au moyen duquel on peut arrêter le moteur d'entraînement de la pompe lorsque la pression dépasse une valeur prédéterminée, ou une valve hydraulique (19) réglable, au moyen de laquelle on peut fermer les conduites secondaires (8', 8'') ou mettre la conduite de pompe (8) en communication avec une conduite de retour (7) menant au réservoir de liquide hydraulique (4) et éventuellement arrêter le moteur de la pompe, est connecté(e) à la chambre de l'ensemble piston-cylindre (15) multiplicateur de pression qui est située petit côté du piston et communique avec le vérin de fermeture (14).

2. Dispositif de commande selon la revendication 1, caractérisé par le fait que la valve hydraulique (19) réglable destinée à fermer les conduites secondaires (8', 8'') est un sélecteur de circuit.

3. Dispositif de commande selon la revendication 1, caractérisé par le fait qu'un système de comptage (17) du nombre de dépassements de la pression est activé par le mano-contacteur (16) électrique ou la valve hydraulique (19) réglable.
